# EUROPÄISCHE PATENTSCHRIFT

(11) **EP 2 301 123 B1**
(45) Veröffentlichungstag und Bekanntmachung des Hinweises auf die Patenterteilung: **02.10.2013**
(21) Anmeldenummer: 08784788.5
(22) Anmeldetag: 15.07.2008
(51) Int. Cl.: H02B 1/044

(54) **BEDIENELEMENT MIT INSTALLATIONSEINHEIT**
CONTROL ELEMENT COMPRISING AN INSTALLATION UNIT
ÉLÉMENT DE COMMANDE COMPORTANT UNE UNITÉ DE MONTAGE

(43) Veröffentlichungstag der Anmeldung: 30.03.2011
(73) Patentinhaber: Siemens Aktiengesellschaft, 80333 München (DE)
(72) Erfinder: BECK, Ronny, D- 04249 Leipzig (DE); HIRSCHBERGER, Frank, 08223 Falkenstein (DE)
(86) Internationale Anmeldenummer: PCT/EP2008/005780
(87) Internationale Veröffentlichungsnummer: WO 2010/006625

(56) Entgegenhaltungen:
- EP-A- 0 037 896
- DE-A1- 2 609 473
- DE-A1- 10 330 853
- US-A- 4 745 534
- US-A- 5 542 859

## Beschreibung

Die Erfindung betrifft ein Bedienelement mit Installations-einheit, die eine Frontplatte sowie ein Halteelement aufweist.

Eine derartige Installationseinheit kommt bei Maschinen oder elektrischen Anlagen zum Einsatz, die über Befehlsgeräte, wie zum Beispiel Drucktaster, Wahlschalter usw., die auf die Steuerung einwirken, bedient werden. Diese Befehlsgeräte werden in Schalttafeln, Bedientableaus, Schaltschranktüren oder Gehäusedeckeln montiert. Befehlsgeräte sind in der Regel modular aufgebaut; das bedeutet, sie bestehen aus einem Betätiger, einem Befestigungsteil wie zum Beispiel einer Ringmutter oder einem Montagehalter und einem oder mehreren Schaltelementen, die als Öffner- oder Schließerschaltglieder ausgeführt sind. Zur Montage wird der Betätiger in der Regel von vorne durch ein Loch in der Schalttafel geführt und von hinten mittels eines Befestigungsteils montiert. Die Schaltelemente werden mit Schrauben, Schnapphaken oder Riegel mechanisch in dem Betätiger oder dem Befestigungsteil verbunden. Die elektrische Verbindung der Schaltelemente mit der Steuerung erfolgt über die Anschlussklemmen.

Bei Sicherheitsanwendungen wie zum Beispiel Not-Aus-Befehlsgeräten ist es Vorschrift, dass das Signal durch das Öffnen von zwangsöffnenden Kontakten erzeugt wird. Das heißt, dass bei einem unbetätigten Not-Aus-Befehlsgerät die Kontakte und damit der zugehörige Stromkreis geschlossen sind. Im Störungs- oder Notfall wird durch Schlagen auf den Not-Aus-Betätiger, der sich vor der Schaltertafel befindet, der Öffnerkontakt unterbrochen und die Anlage oder Maschine in einen sicheren Zustand versetzt. Dies funktioniert jedoch nur, wenn die räumliche Zuordnung zwischen Betätiger und Schaltelement sichergestellt ist. Durch mangelhafte Montage oder durch Gewalteinwirkung kann es vorkommen, dass die Schaltelemente mechanisch vom Betätiger getrennt werden. In diesem Fall ist das Not-Aus-Befehlsgerät nicht mehr funktionsfähig, das heißt, bei einer Betätigung im Notfall werden die Kontakte nicht geöffnet, und damit erfolgt auch keine Beseitigung des-Gefahrenzustands. Dies kann zu fatalen Schäden für Mensch und Maschine führen. Daher kommt der sicheren Verbindung zwischen Betätiger und Schaltelement eine wesentliche Bedeutung zu.

Aus der DE 37 09 970 C2 geht dazu ein Gehäuse hervor, das in die Öffnung einer Schalttafel eingeschoben wird. Zur Befestigung des Gehäuses in der Aufnahmewand sind in zwei gegenüberliegenden Seitenwänden im Kantenbereich Nuten vorgesehen, die mit ihren Enden an die benachbarten Gehäuseseiten münden. In diesen Nuten ist ein als Federbandstreifen ausgebildetes Befestigungselement hochkant eingesetzt. Die Tiefe der Nuten ist im Wesentlichen gleich der Breite des Federbandstreifens und die Breite der Nut ist nur unwesentlich größer als die Stärke des Federbandmaterials. Die Nuten liegen im Wesentlichen im Bereich der Verstärkungsstege, so dass ausreichend Material für ihre Aufnahme vorhanden ist. Der Federbandstreifen liegt mit einem mittleren Längsabschnitt hochkant in der Nut, während seine beiden äußeren Längsabschnitte aus der benachbarten Seitenwand heraustreten, wobei diese Längsabschnitte, die die an der Aufnahmewand anliegenden Federelemente bilden, derart bogenförmig verlaufen, dass ihre Enden sich wieder mehr oder weniger der Gehäuseseitenwand nähern.

Die DE 100 34 253 C1 beschreibt ein in einer Bedientafel befestigbares Befehlsgerät, bei dem ein Zwischenelement frontseitig mit einem äußeren Auflageelement an einer Bedientafel anliegt und in einem inneren Auflageelement in einer Ausnehmung in der Bedientafel hinein beziehungsweise durch die Ausnehmung hindurchragt. Ein Signalgeber liegt frontseitig mit einem Auflagebereich am inneren Auflageelement an und reicht in einem Durchtrittsbereich durch das Zwischenelement und die Bedientafel hindurch. Ein Geberhalter ist rückseitig an die Bedientafel ansetzbar und mit dem Durchtrittsbereich verspannbar.

Aus der DE 43 42 512 A1 geht eine elektrische Einbaudose hervor, die zur elektrischen Installation von elektrischen Baugruppen wie Schalter, Stecker oder Verteiler dient. Es wird eine universell einsetzbare Einbaudose vorgeschlagen, die ohne zu verschraubende und/oder zu verspannende Elemente in eine Montageöffnung fest eingesetzt werden kann. Die Einbaudose weist an diametral angeordneten Abflachungen des Außenmantels Stützelemente auf, deren freie Enden mit einem bogenförmig gekrümmten, eine Verzahnung tragenden Drucksteg verbunden sind, wobei die Stirnfläche des Drucksteges bis nahe an den Stützrand herangeführt ist. In einem schräg ausgebildeten Mantelabschnitt sind in diametraler Anordnung Rohrstützen vorgesehen, die so ausgebildet sind, dass mehrere in benachbarter Anordnung anzubringende Einbaudosen über ein elastisches Zwischenstück miteinander verbunden werden können. Die Einbaudose wird durch einfaches Eindrücken in die Montageöffnung lagegenau befestigt, wobei zwischen den Druckstegen und der benachbarten Wand der Montageöffnung eine feste form-schlüssige Klemmverbindung hergestellt wird. Das Dokument EP 0037896 offenbart ein Bedienelement gemäss dem Oberbegriff des Anspruchs 1.

Die Aufgabe der vorliegenden Erfindung besteht darin, ein Bedienelement mit einer verbesserter Installationseinheit zu schaffen, das eine einfache Einhand-Montage ermöglicht.

Diese Aufgabe wird durch ein Bedienelement mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Bedienelement mit einer Installationseinheit gelöst, die eine Frontplatte sowie ein Halteelement aufweist, wobei das Bedienelement vorzugsweise als elektrischer Schalter ausgebildet ist und mindestens ein Rastelement aufweist, und wobei das Bedienelement durch eine Öffnung bzw. einen Durchbruch in der Frontplatte in das Halteelement durch das mindestens eine Rastelement verrastend einführbar ist.

Vorzugsweise weist das Bedienelement zwei Rastelemente auf, die aus Kunststoff gefertigt sind. Beim axialen Einpressen des Bedienelementes in den vorzugsweise zylindrischen Frontplattendurchbruch werden die vorzugsweise elastischen Randelemente in das Halteelement eingeführt. Die als Kunststoffflügel ausgebildeten Rastelemente weisen vorzugsweise Einführungsschrägen und Einführungsradien auf. Beim Einführen des Bedienelements in den Frontplattendurchbruch legen sich die Kunststoffflügel an die Wandungen des Frontplattendurchbruchs an. Aus dieser Zwangslage resultieren Spannungen in den Kunststoffflügeln, die sich gegen den Frontplattendurchbruch richten und damit das Bedienelement in der Frontplatte fixieren.

Das erfindungsgemäße Bedienelement mit Installationseinheit erfordert eine Montagekraft von maximal 8 bis 10 Newton. Erfindungswesentlich ist es, nach dem Einpressen des Bedienelementes in den Frontplattendurchbruch eine ausreichend große Spannkraft aufzubringen, um das komplette Halteelement in jeder Einbaulage sicher montieren zu können. Die Lösung zeichnet sich dadurch aus, dass je nach Toleranzlage der Frontplattendurchbrüche, der Kunststoffflügel oder der Umgebungstemperatur eine Spannkraft von maximal 45 Newton und mindestens 12 Newton aufgebracht wird. Dadurch wird selbst bei ungünstigen Einbauverhältnissen eine hohe Funktionalität gewährleistet.

Die Einführungsschrägen beziehungsweise Einführungsradien der erfindungsgemäßen Rastelemente haben eine zentrierende Funktion, die durch die flexiblen Flanken der Kunststoffflügel auch größere Schwankungen in den Formtoleranzen des Frontplattendurchbruchs ausgleichen. Die Kunststoffflügel dienen weiterhin zur Lageorientierung von Zubehörteilen. Dazu besitzen die Zubehörteile zahnförmige Aussparungen und sind zum Bedienelement positionierbar. Dieser weitere Nutzen erfordert keine ergänzenden Bauteile.

Als Werkstoff für die erfindungsgemäßen Kunststoffflügel wird vorzugsweise Ultramid A3WG7/PA66 GF35 eingesetzt. Dies ist eine glasfaserverstärkte und wärmealterungsbeständige Spritzgussmasse für technische Artikel wie Zahnräder, Magnetventilgehäuse, Kabelschlepper, Kfz-Kraftstoffverteiler und Bauteile für Kfz-Gangschaltungen. Die Alterungsbeständigkeit führt dazu, dass selbst nach mehrmaliger Montage die Kunststoffflügel noch eine ausreichende Spannkraft aufbringen, um die Montagekraft des Halteelements sicher zu überwinden. Die hohe Funktionalität und Prozesssicherheit der erfindungsgemäßen Kunststoffflügel ermöglicht automatisierte Montagevorgänge.

Wird das Gehäuse des Bedienelementes aus Kunststoff ausgebildet, so werden die Kunststoffflügel direkt angespritzt. In der Druckgussausführung werden die Kunststoffflügel auf die Metallrosette aufgepresst. Die Flanken der Kunststoffflügel legen sich beim Einpressen in die Zubehörteile an die Zahnflanken an. Dadurch ist es möglich, ohne weitere Bauteile in 90° Schritten Zubehörteile zu Befehlsgeräten zu positionieren. Wird die Position falsch gewählt, kann das Zubehörteil einfach weitergedreht werden, um schließlich in der folgenden Position erneut einzurasten.

Gemäß der vorliegenden Erfindung ist es auch möglich, eine halterlose Dauermontage von Blindstopfen zu realisieren. Die in ihrem inneren funktionslosen Verschlussstopfen bieten Platz zur Aufnahme eines angespritzten Federelementes. An beiden Enden der Federelemente werden Spannbacken angeformt.

Weitere Vorteile und Ausführungen der Erfindung werden nachfolgend anhand von Ausführungsbeispielen sowie anhand der Zeichnung erläutert.

Dabei zeigen schematisch:
- Fig. 1: eine Explosionsdarstellung eines erfindungsgemäßen Bedienelements mit Installationseinheit;
- Fig. 2: eine perspektivische Darstellung des Bedienelements;
- Fig. 3: eine Schnittdarstellung des Bedienelements mit einer Frontansicht der erfindungsgemäßen Rastelemente;
- Fig. 4: eine Schnittdarstellung des Bedienelements mit einer Seitenansicht der Rastelemente nach Fig. 3;
- Fig. 5: eine Schnittdarstellung eines vergrößerten Ausschnitts aus Fig. 3 mit dem erfindungsgemäßen Rastelement;
- Fig. 6: eine perspektivische Darstellung des auf dem Kopf liegenden Bedienelements mit angespritzten Kunststoffflügeln;
- Fig. 7: eine perspektivische Darstellung eines vergrößerten Ausschnitts aus Fig.6;
- Fig. 8: eine perspektivische Darstellung des auf dem Kopf liegenden Bedienelements mit aufgesteckten Kunststoffflügeln;
- Fig. 9: eine perspektivische Darstellung eines vergrößerten Ausschnitts aus Fig.8;
- Fig. 10: eine perspektivische Darstellung des Bedienelements mit Zubehörteil;
- Fig. 11: eine Unteransicht des Bedienelements mit Zubehörteil nach Fig.10;
- Fig. 12: eine perspektivische Darstellung eines als funktionslosen Verschlussstopfens ausgeführten Bedienelements;
- Fig. 13: eine Unteransicht des funktionslosen Verschlussstopfens nach Fig.12.

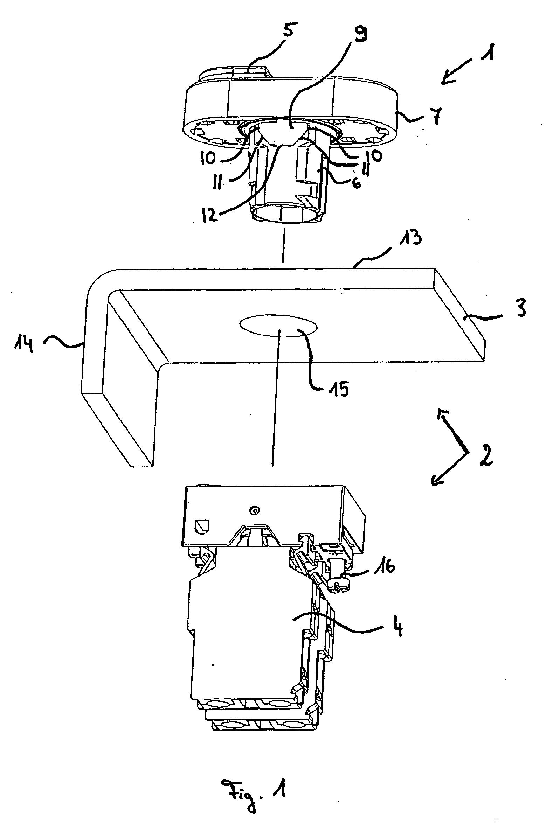

Fig. 1 zeigt eine Explosionsdarstellung eines erfindungsgemäßen Bedienelements 1 mit einer Installationseinheit 2, die eine Frontplatte 3 sowie ein Halteelement 4 aufweist. Das Bedienelement 1 kann als Drucktaster 5, insbesondere als Doppeldrucktaster ausgeführt sein. Das Bedienelement 1 weist vorzugsweise ein zweiteiliges Gehäuse auf, das eine Rosette 6 und einen darauf aufgesetzten Frontring 7 umfasst. Die Rosette 6 weist einen zylindrischen Grundkörper auf und ist als Gehäuseunterteil ausgeführt. Der als Gehäuseoberteil des Bedienelements 1 fungierende Frontring 7 ist vorzugsweise als Superellipse ausgebildet und stellt somit eine Mischung aus Ellipse und Rechteck dar. Der Frontring 7 weist eine unterseitig angeordnete Auflagefläche 8 auf, die jeweils rechts und links über die zentriert unter dem Frontring 7 angeordnete Rosette 6 hinausragt. Im Frontring 7 ist mindestens ein Drucktaster 5 angeordnet. An der Rosette 6 ist mindestens ein Rastelement 9 angeordnet. Das Rastelement 9 ist vorzugsweise flügelförmig ausgebildet und weist zwei parallel zueinander verlaufende Flanken 10 auf, die jeweils in Einführungsschrägen 11 münden. Die Einführungsschrägen 11 gehen in den Kantenbereich 12 des Rastelements 9 über.

Die Frontplatte 3 ist vorzugsweise einteilig ausgebildet und weist zwei vorzugsweise im 90° Winkel zueinander angeordnete Flächen 13, 14 auf. In der Fläche 13 der Frontplatte 3 ist ein zylindrischer Durchbruch 15 angeordnet. Das Bedienelement 1 kann so über die Rosette 6 von oben durch den Durchbruch 15 in der Frontplatte 3 eingeführt werden. Die Endfixierung des Bedienelements 1 erfolgt dann über ein unterseitig zur Frontplatte 3 angeordnetes Halteelement 4, in welchem die Rosette 6 des Bedienelements 1 verrastend eingeführt wird. Das Halteelement 4 weist eine Spannschraube 16 auf, die ein Verspannen des Halteelements 4 gegen die Frontplatte 3 ermöglicht.

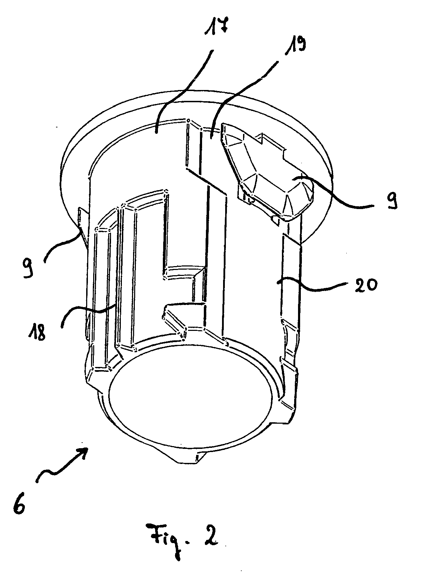

Fig. 2 zeigt eine perspektivische Darstellung des zylindrischen Grundkörpers des Bedienelements 1. Der als Rosette 6 ausgebildete Grundkörper weist vorzugsweise flügelförmige Rastelemente 9 im oberen Drittel der Rosette 6 in unmittelbarer Nähe zum Frontring 7 auf. Die Außengeometrie der Rosette 6 ist strukturiert ausgebildet, das heißt, es gibt sowohl glatte Flächen 17 als auch Ausnehmungen 18 am Außenrand der Rosette 6. Das Rastelement 9 ist in einer ebenfalls flügelförmig ausgebildeten Aussparung 19 der Rosette 6 angeordnet, die in einen Führungskanal 20 mündet.

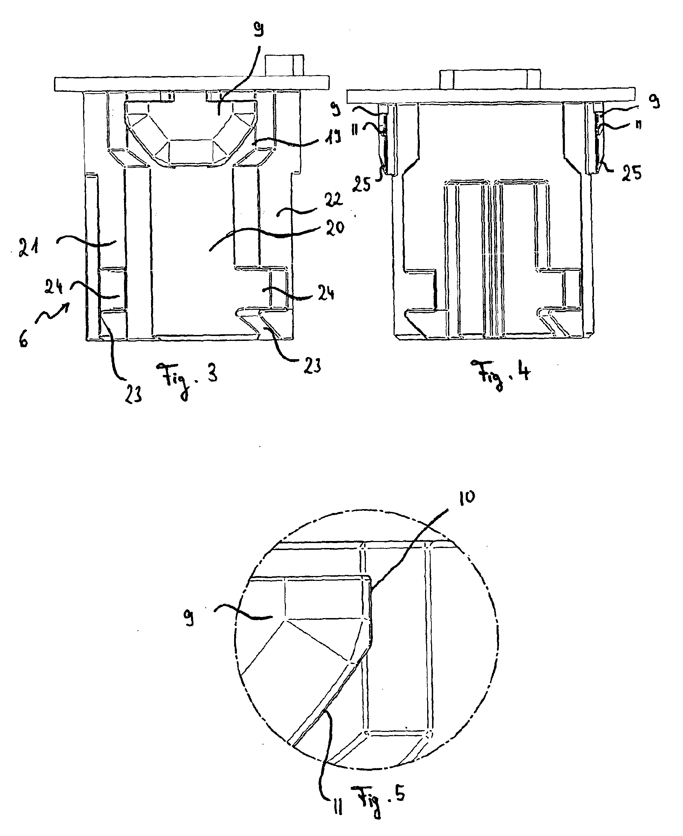

Fig. 3 zeigt eine Schnittdarstellung des zylindrischen Grundkörpers des Bedienelements 1 mit einer Frontansicht des erfindungsgemäßen Rastelements 9. Das Rastelement 9 ist in der ebenso ausgeformten Aussparung 19 angeordnet, die in den Führungskanal 20 mündet. Der Führungskanal 20 wird durch zwei rechts und links vom Führungskanal 20 ausgebildeten Randstrukturen 21, 22 ausgebildet. Diese Randstrukturen 21, 22 weisen Führungsschrägen 23 sowie Aussparungen 24 auf, die ein zielgerichtetes Einführen und Verrasten der Rosette 6 im Halteelement 4 ermöglichen.

Fig. 4 zeigt eine Schnittdarstellung des zylindrischen Grundkörpers des Bedienelements 1 mit einer Seitenansicht der Rastelemente 9. Die Rastelemente 9 weisen neben den Einführungsschrägen 11 auch Einführungsradien 25 auf, die das zielgerichtete Einführen und Verrasten der Rosette 6 erleichtern.

Fig. 5 zeigt eine Schnittdarstellung eines vergrößerten Ausschnitts aus Fig. 3 mit dem erfindungsgemäßen Rastelement 9. Dargestellt sind außerdem die Flanken 10 des verrastenden Flügelelementes sowie die Einführungsschrägen 11.

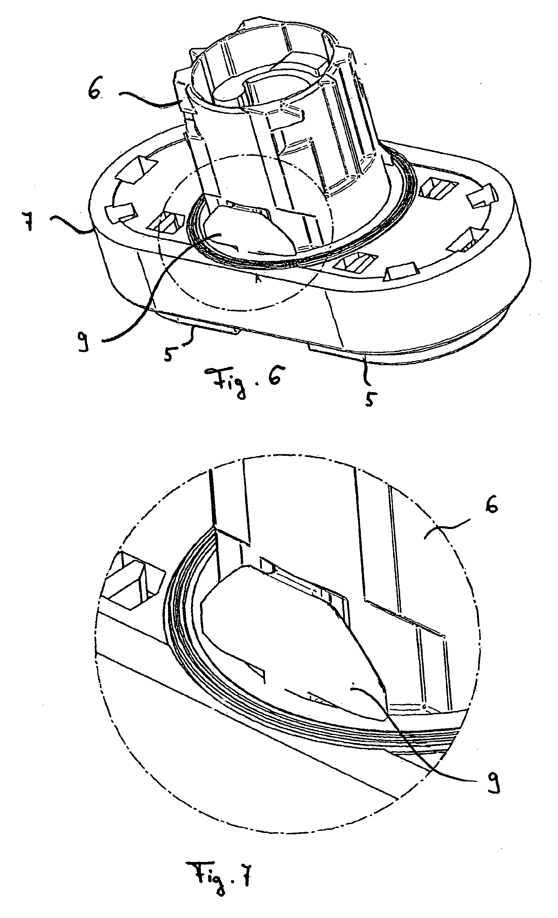

Fig. 6 zeigt eine perspektivische Darstellung des auf dem Frontring 7 liegenden Bedienelements 1 mit angespritztem Kunststoffflügel, der in Fig. 7 in einem vergrößerten Ausschnitt ebenfalls noch mal dargestellt ist. Eine derartige Ausführungsform mit direkt angespritztem Kunststoffflügel ist dann vorgesehen, wenn die Rosette 6 aus Kunststoff gefertigt ist.

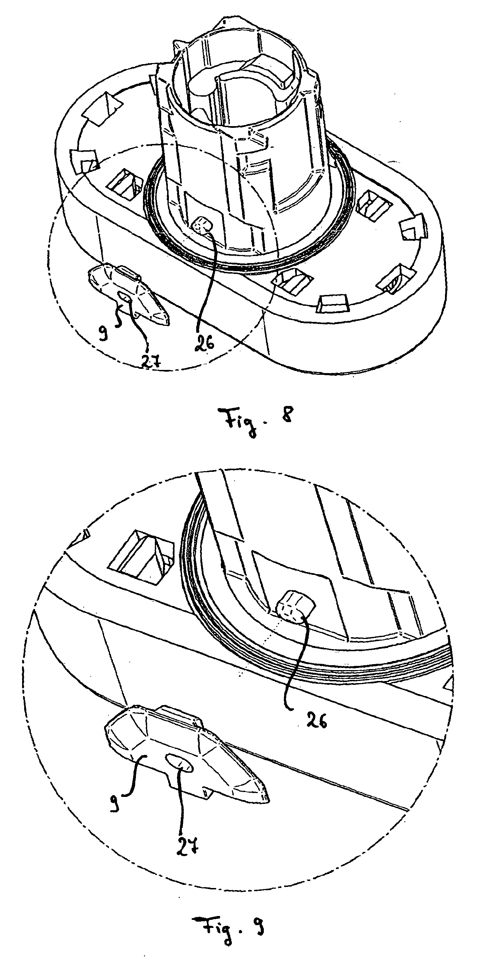

Fig. 8 zeigt eine perspektivische Darstellung des auf dem Frontring 7 liegenden Bedienelements 1 mit angepresstem Kunststoffflügel, der in Fig. 9 in einem vergrößerten Ausschnitt ebenfalls noch mal dargestellt ist. Eine derartige Ausführungsform mit aufgepresstem Kunststoffflügel ist dann vorgesehen, wenn die Rosette 6 aus Metall gefertigt ist. Um das Rastelement 9 auf die Rosette 6 aufpressen zu können, ist an der Rosette 6 vorzugsweise ein domförmiger Vorsprung 26 angeordnet. Dieser Vorsprung 26 mündet beim Aufpressen des Kunststoffflügels in ein Lochelement 27, das vorzugsweise zentriert im Kunststoffflügel angeordnet ist.

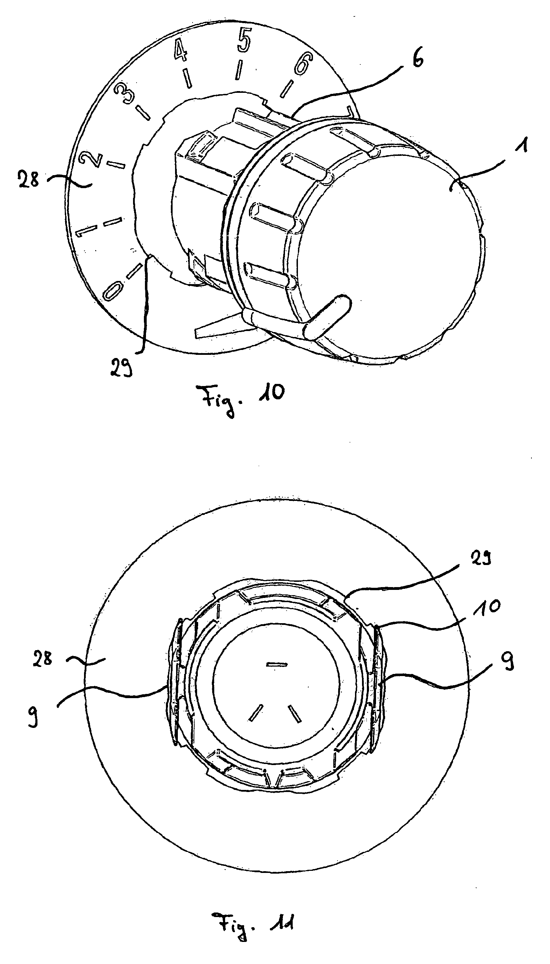

Fig. 10 zeigt eine perspektivische Darstellung eines Bedienelements 1 mit einem Zubehörteil 28. Fig. 11 zeigt eine Unteransicht des Bedienelements 1 mit Zubehörteil 28. Beim Einpressen in das Zubehörteil 28 legen sich die Flanken 10 der Rastelemente 9 an Zahnflanken 29 des Zubehörteils 28 an. Diese Zahnflanken 29 sind vorzugsweise in definierten Abständen beispielsweise in 90° Schritten angeordnet, so dass das Bedienelement 1 ohne weitere Bauteile in definierten Abständen zum Zubehörteil 28 positioniert werden kann. Wird die Position falsch gewählt, kann das Zubehörteil 28 einfach weitergedreht werden, um schließlich in der folgenden Position erneut einzurasten.

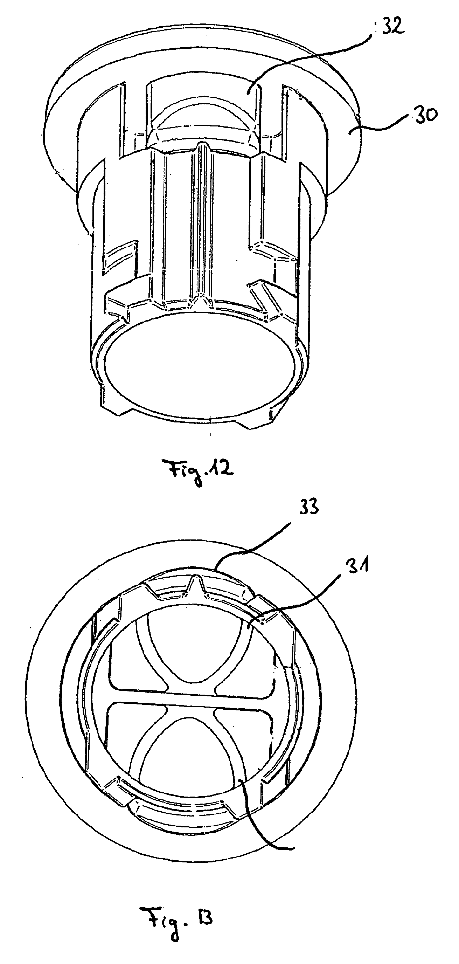

Fig. 12 zeigt eine perspektivische Darstellung eines als funktionslosen Verschlussstopfens 30 ausgebildeten Bedienelements 1. Die funktionslosen Verschlussstopfen 30 oder auch Blindstopfen bieten in ihrem inneren Platz zur Aufnahme eines angespritzten Federelements 31. Außenseitig sind am zylindrischen Grundkörper des Bedienelements 1 Spannbacken 32 angeordnet, die Einführungsradien 31 aufweisen (Fig. 13).

Fig. 13 zeigt eine Unteransicht des funktionslosen Verschlussstopfens 30 nach Fig. 12.

Das erfindungsgemäße Bedienelement mit verbesserter Installationseinheit ermöglicht eine einfache Einhand-Montage, die über Rastelemente umgesetzt wird.

## Patentansprüche

1. Bedienelement mit einer Installationseinheit, die eine Frontplatte (3) sowie ein Halteelement (4) aufweist, wobei das Bedienelement (1) eine Rosette (6) und einen darauf aufgesetzten Frontring (7) und mindestens ein Rastelement (9) aufweist und durch einen Durchbruch (15) in der Frontplatte (3) in das Halteelement (4) durch das mindestens eine Rastelement (9) verrastend einführbar ist, **dadurch gekennzeichnet, dass** das Rastelement (9) als Flügel mit Einführungsschrägen (11) ausgebildet ist, wobei das flügelförmige Rastelement (9) im oberen Drittel der Rosette (6) in unmittelbarer Nähe zum Frontring (7) angeordnet ist, und wobei das Rastelement (9) in einer flügelförmig ausgebildeten Aussparung (19) der Rosette (6) angeordnet ist, die in einen Führungskanal (20) mündet.

2. Bedienelement nach Anspruch 1, **dadurch gekennzeichnet, dass** die Frontplatte (3) durch das mindestens eine Rastelement (9) am Bedienelement (1) verliersicher fixiert ist.

3. Bedienelement nach Anspruch 1 oder 2, **dadurch gekennzeichnet, dass** das Rastelement (9) aus Kunststoff gefertigt ist.

4. Bedienelement nach einem der vorhergehenden Ansprüche, **dadurch gekennzeichnet, dass** das mindestens eine Rastelement (9) elastisch ausgebildet ist.

5. Bedienelement nach einem der vorhergehenden Ansprüche, **dadurch gekennzeichnet, dass** das Rastelement (9) Einführungsradien (25) aufweist.

6. Bedienelement nach einem der vorhergehenden Ansprüche, **dadurch gekennzeichnet, dass** Bedienelement (1) einen Frontring (3) und eine Rosette (6) aufweist, an die das mindestens eine Rastelement (9) angespritzt ist.

7. Bedienelement nach einem der vorhergehenden Ansprüche, **dadurch gekennzeichnet, dass** bei Bedienelementen (1) mit Metallrosette das mindestens eine Rastelement (9) aufgepresst ist.

8. Bedienelement nach Anspruch 1, **dadurch gekennzeichnet, dass** das Bedienelement als funktionsloser Verschlusstopfen (30) mit Rosette (6) ausgebildet ist.

## Claims

1. Control element comprising an installation unit that has a front panel (3) and a holding element (4), wherein the control element (1) has a rosette (6) and a front ring (7) mounted thereon and at least one latching element (9) and can be introduced into the holding element (4) through a breakout (15) in the front panel (3) and locked in place by means of the at least one latching element (9), **characterised in that** the latching element (9) is embodied as a wing having engagement bevels (11), wherein the wing-shaped latching element (9) is arranged in the upper third of the rosette (6) in immediate proximity to the front ring (7), and wherein the latching element (9) is arranged in a wing-shaped recess (19) of the rosette (6) which leads into a guide channel (20).

2. Control element according to claim 1, **characterised in that** the front panel (3) is captively fixed to the control element (1) by means of the at least one latching element (9).

3. Control element according to claim 1 or 2, **characterised in that** the latching element (9) is made of plastic.

4. Control element according to one of the preceding claims, **characterised in that** the at least one latching element (9) is embodied as elastic.

5. Control element according to one of the preceding claims, **characterised in that** the latching element (9) has engagement radii (25).

6. Control element according to one of the preceding claims, **characterised in that** the control element (1) has a front ring (3) and a rosette (6) onto which the at least one latching element (9) is integrally extruded.

7. Control element according to one of the preceding claims, **characterised in that** in the case of control elements (1) having a metal rosette the at least one latching element (9) is pressed on.

8. Control element according to claim 1, **characterised in that** the control element is embodied as a functionless closing plug (30) with rosette (6).

## Revendications

1. Elément de commande comportant une unité de montage, qui présente une plaque frontale (3) ainsi qu'un élément de maintien (4), l'élément de commande (1) présentant une rosette (6) et une bague frontale (7) posée dessus et au moins un élément encliquetable (9) et pouvant être introduit dans l'élément de maintien (4) par enclenchement à travers un passage (15) dans la plaque frontale (3) par le biais de l'au moins un élément encliquetable (4), **caractérisé en ce que** l'élément encliquetable (9) est réalisé en tant qu'ailette avec une pente d'introduction (11), l'élément encliquetable (9) en forme d'ailette étant disposé dans le tiers supérieur de la rosette (6) à proximité directe de la bague frontale (7), et l'élément encliquetable (9) étant disposé dans un évidement (19) de la rosette réalisé en forme d'ailette qui débouche dans un canal de guidage (20).

2. Elément de commande selon la revendication 1, **caractérisé en ce que** la plaque frontale (3) est fixée de manière inamovible par le biais de l'au moins un élément encliquetable (9) à l'élément de commande (1).

3. Elément de commande selon la revendication 1 ou 2, **caractérisé en ce que** l'élément encliquetable (9) est fabriqué en matière plastique.

4. Elément de commande selon l'une des revendications précédentes, **caractérisé en ce que** l'au moins un élément encliquetable (9) est réalisé de manière élastique.

5. Elément de commande selon l'une des revendications précédentes, **caractérisé en ce que** l'élément encliquetable (9) présente des rayons d'introduction (25).

6. Elément de commande selon l'une des revendications précédentes, **caractérisé en ce que** l'élément de commande (1) présente une bague frontale (7) et une rosette (6) au niveau de laquelle l'au moins un élément encliquetable (9) est appliqué par injection.

7. Elément de commande selon l'une des revendications précédentes, **caractérisé en ce que** dans le cas d'éléments de commande (1) comportant une rosette métallique l'au moins un élément encliquetable (9) est engagé par pression.

8. Elément de commande selon la revendication 1, **caractérisé en ce que** l'élément de commande est réalisé en tant que bouchon de fermeture non fonctionnel (30) avec la rosette (6).
